# EUROPEAN PATENT SPECIFICATION

(11) **EP 0 458 723 B1**
(45) Date of publication and mention of the grant of the patent: **03.04.1996**
(21) Application number: 91500045.9
(22) Date of filing: 21.05.1991
(51) Int. Cl.: H04M 17/02

(54) **Validation and identification unit in a modular public telephone management system using credit cards**
Einheit zur Bewertung und Identifizierung in einem Verwaltungssystem für öffentliche modulare Fernsprechgeräte mit Kreditkarten
Unité de validation et d'identification dans un système de gestion de telephones publics modulaires utilisant des cartes de crédit

(30) Priority: 25.05.1990 ES 9001464
(43) Date of publication of application: 27.11.1991
(73) Proprietor: TELEFONICA DE ESPANA, S.A., E-28013 Madrid (ES)
(72) Inventor: Ibanez Palomeque, Francisco, E-28050 Madrid (ES); Mir Cepria, Jose Telefonica, C/ Emilio Vargas, no.6 28013 Madrid (ES)
(74) Representative: Carpintero Lopez, Francisco

(56) References cited:
- TELCOM REPORT vol. 13, no. 1, January 1990, MUNCHEN, DE pages 28 - 31 , XP127514 F.P. KÖSTER ET AL. 'öffentliche Kommunikation "à la carte" und "à conto"'
- BRITISH TELECOMMUNICATIONS ENGINEERING vol. 9, no. 2, July 1990, LONDON, GB pages 112 - 117 , XP148985 N.G.POPE 'The Cashless Services System'

## Description

The present invention relates to a validation and identification unit for the modular public telephone management system which is aimed at univocally identifying the telephone and automatically validating the credit card used.

### FIELD OF THE INVENTION

The validation and identification unit is applicable to the field of telecommunications, specifically forming part of the infrastructure required for the new public telephone service to work properly with the use of credit cards being put into service or used by means of the modular public telephone management system.

### BACKGROUND OF THE INVENTION

Various systems are currently known to have an identification function for the equipment connected thereto that are to be controlled, but none of these consider the validation and identification functions, not to speak of the communication requirements inherent in their use in the infrastructure of the new public telephone service.

Some public telephone units are known to provide, within their structural context, the possibility of only being used by applying a telephone service card issued by the relevant telephone company.

Certain telephone units have been known for some time to exist, with the possibility of being used only by means of tokens or the like, also supplied by the relevant telephone company.

TELCOM REPORT, vol. 13, no. 1, Jan. 1990, München, DE; pages 28-31, by Köster et al.: "Öffentliche Kommunication "à la carte" und "à conto" discloses a modular public telephone system which is hierarchically organized and includes a plurality of card and coin operated telephone stations. The interface unit for connecting a modular public telephone to the switched network also performs validation of a credit or telephone card used by a telephone user.

### DESCRIPTION OF THE INVENTION

The validation and identification unit (VIU) forms part of the modular public telephone management system, which comprises the following large blocks:
- Modular telephones (MT), intelligent telephones for public use accepting coins, prepaid card and credit card payment.
- Validation and identification unit (VIU), specifically aimed at identifying and authorizing connection of the modular telephones to the switched telephone network, and to validate phone requests by credit cards.
- Modular public telephones adaptation unit (MTAU), dealing with the validation of credit transactions of modular telephones not connected to the validation and identification units.
- Modular public telephones operating system (MTOS), dealing provincially with the centralization of alarms reported by modular telephones (MT), validation and identification units (VIU) and modular public telephones adaptation units (MTAU), likewise generating breakdown and repair reports, statistical reports and teleprogramming modular telephones, validation and identification units and modular telephones adaptation units.
- Validation and invoicing centre (VIC), dealing nationally with the validation of credit cards, keeping black and grey credit card lists, and contemporaneously communicating with the card issuing centres.

The validation and identification unit (VIU), found within the modular telephone management system that is broadly defined hereinbefore is, in summary form, a system located at telephone exchanges with the following specific functions:
- To identify and authorize connection of modular telephones (MT ) to the Switched Telephone Network (STN). If the terminal being identified is not a modular telephone, the validation and identification unit will disallow connection thereof to the switched telephone network.
- To validate call requests with credit cards, conveying data input from the modular telephone to the validation and invoicing centre, and vice versa.
- It also carries out preservation and maintenance functions, teleprogramming operating parameters, sending both its own daily routine reports and those of the modular telephones connected to the validation and identification unit, and sending reports of validation and identification unit alarms.

The validation and identification unit comprises a number of units connected to each other, and described hereunder.

A. - Power pack: this unit generates the voltages required by the whole of the validation and identification unit, from the voltage stemming from the telephone exchange.

Broadly speaking, the power pack feeds the necessary power for the validation and identification unit to work properly.

This unit meets at the same time various input and output voltage and load requirements, necessary for the VIU to feed according to digital or analogue outputs, or artificial lines.

The validation and identification unit requires no control and is located at an exchange, thereby ensuring a suitable rate of availability, by means of the use of a basic redundant scheme, comprising two identical feed modules working in parallel.

The power pack can also handle possible harmful unusual situations originating therein, among them overvoltage at the outputs of digital level connections, that could lead to the destruction of the digital logic.

The protection circuit will usually become operational due to irreversible breakdowns in converter modules.

In order to improve supervision and maintenance of the equipment provided, the power subsystem acts as detector for the state of all power lines thereof.

In any abnormal situation, it gives a local warning by switching on a light at the front panel, sending another warning signal to the actual exchange system, by normal open relay contact.

B. - Communications unit: this unit allows incoming calls to be received through a line in the switched network and outgoing calls to be made by both multifrequency and decadic dialling.

Communication takes place by means of a modem, using a microprocessor as control unit.

It also acts as a modem for the X.25 interface, being controlled by the same microprocessor, releasing the CPU from this duty.

The communications unit allows connection to the switched telephone network, and to the IBERPAC network.

The circuit for connection to the switched telephone network is especially aimed at establishing communication with the modular telephone operating system, in order to transfer all messages required by the CPU.

This communication with the CPU can be effected by the validation and identification unit or by the modular telephone operating system.

In the event that communication is established by the validation and identification unit, the communications unit will have suitable devices for multifrequency and decadic dialling, in addition to a dialling tone detector, in order to verify that the line exists prior to dialling.

In the event of the call being requested by the modular telephone operating system, this unit will have a normal call detector.

C.- CPU: controls the system as a whole, conducting validation and identification unit communications.

This unit contains the essential system parameters, particularly the identification numbers in the validation and identification unit and in the modular telephones connected thereto.

Communication between the different units takes place by means of a parallel bus.

The CPU is the core of the validation and identification system.

The CPU communicates with the lines unit and with the communications unit by means of a double input register allowing asynchronous read out and print out between the microprocessors.

All events outside the CPU are activated by breakdowns, thereby to allow a high-speed reply and a modular software design.

Structurally, it comprises two microprocessors that can avail of all the unit's resources, both being located in a topologically equivalent manner.

There are also several buffers for demultiplexing and isolating the addresses and data buses.

Behind these buffers are all the resources, addressed at the memory.

D.- Lines unit: control communication, feeding and connection with the modular telephones.

Comprises a modem, the latter's multiplexers for modular telephones, the necessary line cut and opening detectors, at both the user and the exchange pair, and a microprocessor to control these functions.

The lines unit verifies the identification code in the modular telephones associated thereto, allowing calls to be made when verification is correct, or otherwise preventing the same.

Until the identification code is checked, the telephones feed from the actual lines unit, by connection to a battery.

Upon verification, if the latter is correct, the user pair is switched from the battery towards the Exchange line, allowing connection to the switched network and thus calls to be made.

The identification code is checked when the modular telephone is both picked up and hung up.

Conversely, if there is an incoming call from the switched network towards the modular telephone, the identification number is also checked before allowing the call to continue towards the telephone.

Any fault found when checking the identification number is conveyed to the CPU, moreover disallowing communication with the telephone.

In light of the above, the line units are connected to the modular telephones, to the telephone exchange and to a battery from which the telephones will feed, such connections taking place through the interconnection unit.

Various sensors and control devices are also provided to determine the state of the lines.

E. - Interconnection unit: this unit interconnects the aforesaid units, in other words, the power pack, the communications unit, the CPU and the lines unit, allowing connection to the modular telephones, to the switched network output lines, to the Exchange's power source and to the IBERPAC network, either by straight connection (X.25) or by a two-wire modem.

The interconnection unit is laid out as a card, connecting all units to each other:
- Feed.
- Lines.
- CPU.
- Communications.

Furthermore, the back part of the interconnection unit allows connection of the modular telephones, the lines in the Exchange, the general feed input, by using the normalized X.25 connector and V.22 bis modem dedicated pair.

### DESCRIPTION OF THE DRAWINGS

In order to provide a fuller descrIption and contribute to the complete understanding of the characteristics of this invention, five sheets of drawings are attached to the specification which, while purely illustrative and not fully comprehensive, show the following:

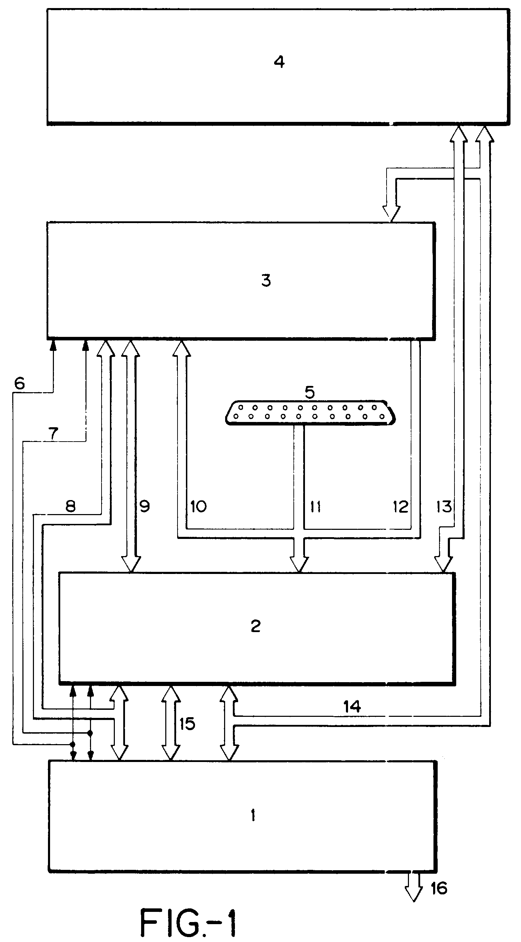

Figure 1. - Is a block diagram of the validation and identification unit subject hereof, with an overview of the functional units making the same up.

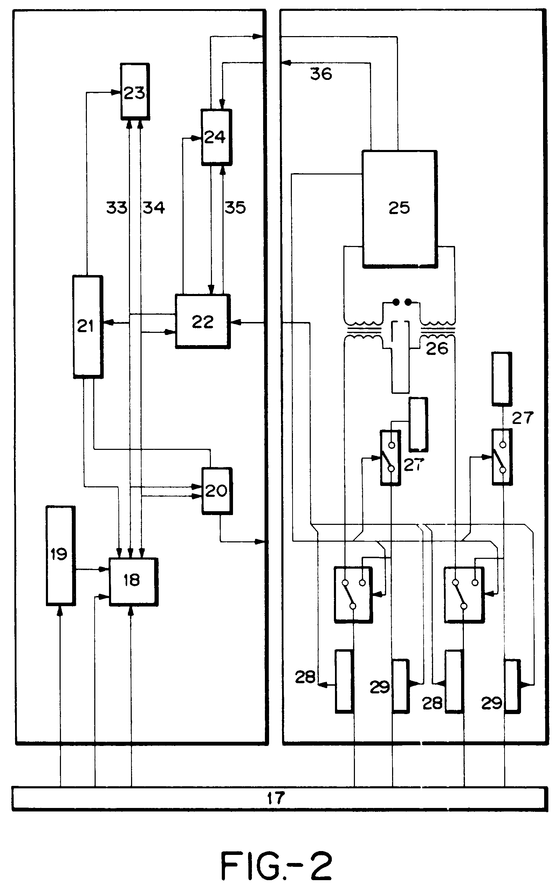

Figure 2. - Is a diagram showing the lines unit in the validation and identification unit.

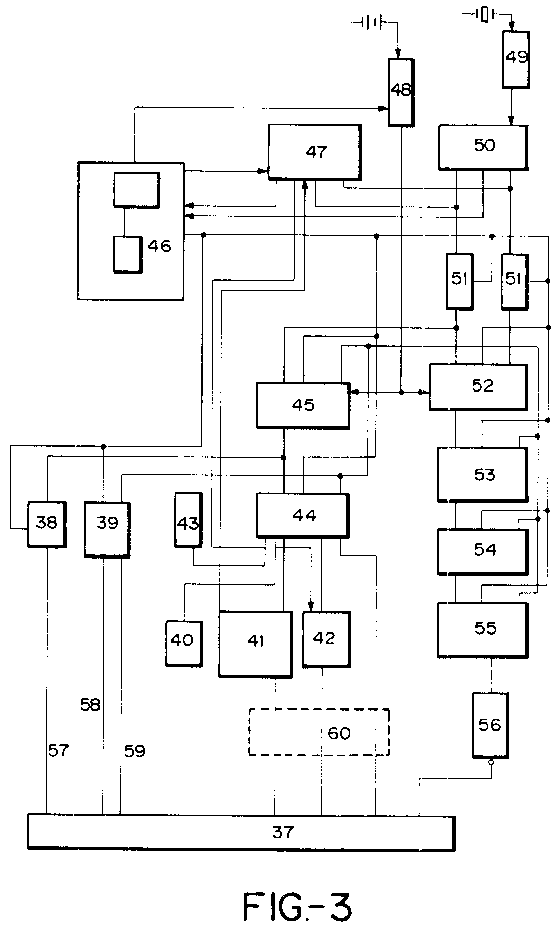

Figure 3.- Is a diagram showing the CPU in the validation and identification unit.

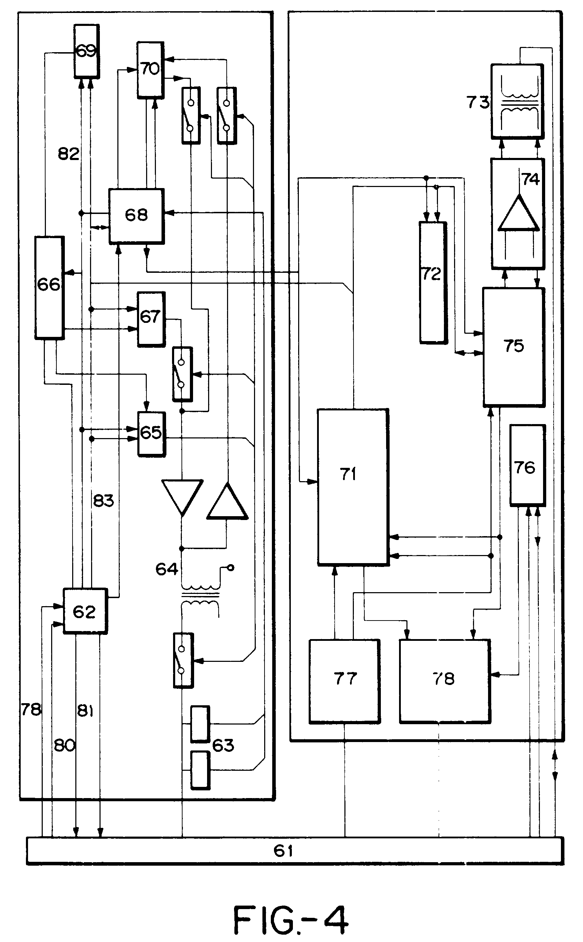

Figure 4. - Is a diagram showing the communications unit in the validation and identification unit.

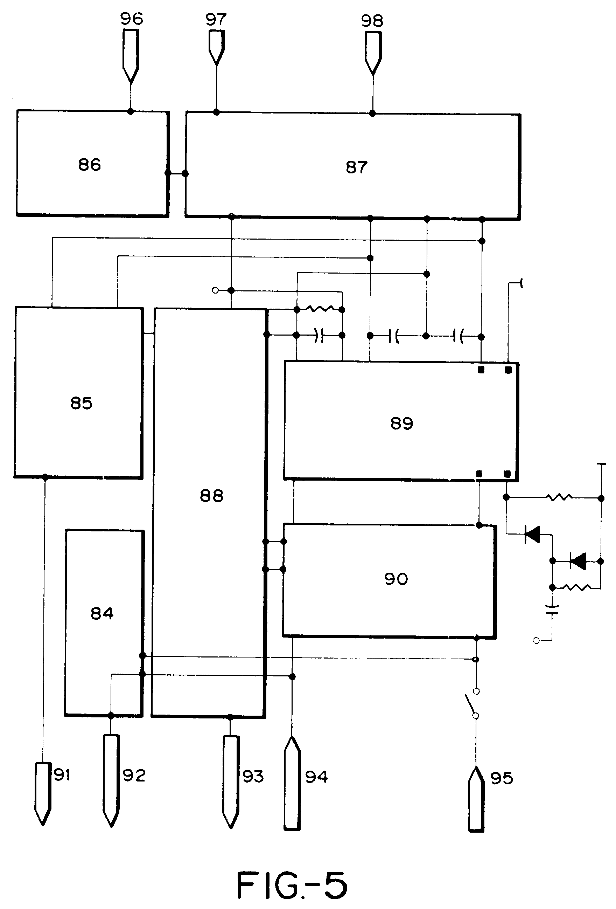

Figure 5. - Is finally a diagram showing the power pack in the validation and identification unit.

### PREFERRED EMBODIMENT OF THE INVENTION

The above figures show the different elements making up the validation and identification unit subject hereof.

Figure number 1 shows the lines unit (1), the CPU (2), the communications unit (3), the power pack (4) and the connector X.25 (5).

The connection with the modular and central telephones is numbered (16), while the signals on the other side connecting the validation and identification units are the following:

Address signals (6), data signals (7), general units control (8), X.25 bus (10) and (11), V.22 bis modem control (12), feed check signals bus (13) and feed bus (14).

The communications unit control is numbered (9), while the lines unit control is numbered (15).

Figure number 2 is a diagram showing the lines unit in the validation and identification unit, which, as aforesaid in the description of the invention, is designed to control line connection of the modular telephones after duly checking their identification code.

In turn, the lines unit will inform the CPU of the fault found in such check.

The CPU in the installation process will otherwise inform the lines unit of the identification code associated to the telephone.

The lines unit has a connector (17) liaising with the interconnection unit, and it may be seen that the state of the lines is to be permanently controlled by means of an architecture based upon the microcontroller (22) and a program memory (EPROM) and an RAM memory (23).

Communication with the telephones will take place through the reference modem (24).

The device decoder (21) allows the signals used to be controlled to handle connection to the telephone line, program the modem, control displays and so on.

Communication of each lines unit with the CPU takes place by means of the FIFO stack (18), which allows the data exchange waiting time to be avoided, for both the data received and that to be transmitted may remain stored in the two registers in the FIFO stack (18), activating two breakdown signals on being loaded.

Each of the lines units available in the equipment is addressed by a decoder (19), so that only one of the outputs thereof activates the communication devices with the CPU.

In order for all line units to be uniform, a single decoder output is carried to each card through the interconnection unit that, as aforesaid, has a connector (17).

The connection bus has a reset circuit that acts on being powered or when so required by CPU.

This same reset line is used for the CPU to determine the line units installed in the equipment.

The digital signals exchanged between the microcontroller (22) and the modem (24) are numbered (35).

The analogue signals (36) given out and received by the modem go from a four-wire layout (in other words, independent signals through two different lines), to a two-wire layout (in other words both signals, receipt and transmission overlapping in the same conductor).

This takes place by operationals (25).

A doorknob transformer (26) is used for line interface, thereby for balanced telephone line (signal not referred to ground) to become an unbalanced telephone line (signal referred to ground).

The transformer also rejects common mode signals (unbalanced) that may have been induced in the telephone line.

Thus, the transformer carries out the following functions:
- Galvanic isolation between the validation and identification unit circuits and the telephone line.
- Change from balanced signal to unbalanced signal.
- Allowing the telephone to feed through its secondary winding.

The line terminals are numbered (27) and pick-up detection and call detection in lines connected externally to modular telephones and exchanges are respectively numbered (28) and (29).

Furthermore, the external address, control and data signals are respectively numbered (30), (31) and (32).

The CPU is structurally represented in figure number 3, comprising two microprocessors with capacity to gain access to all the unit's resources, synthesized by a processor (5) and a controller (47) of the X.25 type, which are located at the CPU in a topologically equivalent manner.

Buffers (38), (39) and (51) are located next to the two microprocessors, in other words the processor (50) and the controller (47) , in order to demultiplex and isolate the data (57), control (58) and addresses (59) buses.

All resources addressed in memory are located after the buffers (38), (39) and (51), namely EPROM serial accessible from port (4), E/S programmable port (44), real-time clock (45), static RAM (52), EPROM (53), timer (54) and devices control (55).

A watchdog (48) and a lithium battery are provided as common system elements, standing alone in respect of the software.

The module (48) acts as both watchdog and as battery switching logic.

The battery powers the static RAM (52) and the real-time clock (45).

The port (44) is used to detect and reset the units in the validation and identification unit and in part of the physical protocol of X.25.

The rest is dealt with by an X.25 controller numbered (47).

The final part of the block diagram comprises an RS232C driver (42) and an RS232C receiver (41) necessary to communicate with the other units, and block (60) necessary for X.25.

All memory decoding, adaptation of times between peripherals, adaptation of control signals between the two microprocessors, DMA control, addresses control, activation of buffers and qualification of breakdown vectors has been effected using a programmable gate array.

The communications unit, shown in figure number 4, is designed to control the line connecting to the switched telephone network, the modem for communicating with IBERPAC and communicating in parallel with the CPU unit, by means of an architecture based upon a microprocessor (68) and the use of a program memory (EPROM) and an RAM memory (69).

The modem (70) executes its functions in point by point applications.

Its aim is to modulate and demodulate X.25 serial communication between the CPU and the access to IBERPAC at the Exchange.

The circuit connecting to the switched telephone network, as part of the communications unit, is the physical liaison between the validation and identification unit and the switched telephone network in order to establish communication with the modular telephone operating system.

The core of the circuit is the aforesaid microcontroller (68), provided with block (69) of RAM and EPROM memories required to execute the programs.

The decoder (66), controlled by the microcontroller (68), by means of the addresses bus (82), qualifies the devices required for external control by means of a two-directional communications device (62) with CPU.

It also has a register (65) that outputs signals controlling the line connection elements, a device (67) generating the multifrequency dialling tones and modem circuit control devices.

Line analogue signals are inserted by means of a separator transformer (64), to which the receipt and transmission signals arrive from two operational amplifiers.

Various analogue switches are provided injecting or otherwise the receipt, transmission and multifrequency dialling signals, towards the operationals.

The signals detecting the state of the line are connected straight to the microcontroller port in order to be read out directly by the same.

These signals refer to the detection of the call current, dialling and engaged tones, calling and detection of blocks modem carrier (63).

Two-directional communication in parallel with the CPU is attained by means of FIFO stack (62) allowing the data to be transmitted and the data received from the CPU to be stored simultaneously.

The unit is moreover provided with a reset circuit that acts on being powered or when so required by CPU.

This same reset line, controlled by the CPU, is used to determine whether the unit is really fitted in the validation and identification unit.

As aforesaid, communication through the switched network requires a series of devices with specific functions, namely as follows:

An incoming call detector (63), with a circuit similar to that used in the validation and identification unit lines unit, using a high sensitivity optoisolator.

A line terminal (64), comprising a high voltage optoisolator, activation of which connects with a transformer laid out as constant current generator.

The transistor keeps a high impedance to alternating signals throughout its range of operation, "is not saturated", and therefore does not influence the same.

The current increases as the loop's resistance decreases to a maximum, staying at such point.

Continuous current running through the transformer windings does not influence operation thereof.

The signal windings add up to a number of convolutions just as the compensation winding, which means that no magnetic flux whatsoever will be generated as a consequence of the continuous current.

A dialling tone (63), using a specific circuit for this purpose, inside which are the antiliaising and band pass filters to detect and process the signal detected.

The circuit has its own quartz oscillator to generate the clocks.

A multifrequency dialer (67), synthesized in a module that executes this function and has six data inputs, plus a strobe input to validate the data present at its inputs.

Integrally, it includes the filters required for the output signal to have the spectral characteristics required by the specifications of the validation and identification unit, which allows the output to be applied straight to the transmission amplifier.

The unit will also be especially designed to allow conversion from two to four wires (64), the analogue signals given out and received by the modem thus passing from a layout of four wires to a layout with two wires.

This takes place by two operationals, a doorknob transformer being used for interface with the line, thereby for the telephone line to go from being balanced to being unbalanced.

The transformer also rejects the "unbalanced" common mode signals that might have been induced in the telephone line.

In addition to this analogue signals process functions, the communcation unit processes a series of digital signals, namely:
- Detection and display signals, these being all the signals shown by the microcontroller (68) to determine the state of the devices outside the same.

All these signals are taken directly to the microcontroller (68) ports.
- Line control signals, controlling the state of the line and serving to program the modem's operating mode.
- CPU connection signals, communicating through port B in the FIFO stack, port A of the same FIFO stack being connected to the internal communication unit data bus.
- Presence and reset signals, informing the CPU whether the communications unit is inserted in the validation and identification unit and generating a reset state in order to be disqualified if any faults are detected therein.
- External adresses, control and data signals, which are numbered (79), (80) and (81).
- To the right of the diagram, where the 2400 bps modem is shown, appear receiver RS232C (77), driver RS232C (78), input/output registers (71), the switches layout unit (72) , the control unit (76) , the modulator/demodulator (75) , the hybrid circuits (74) and the isolation circuits (73).

Finally, figure number 5 shows the power pack, with an input block (98), where the whole module is switched on and reset, battery voltage is distributed to the artificial lines, input to the converter is protected and fuses fault detected.

The power pack is also provided with a power block (87), including the electrolytic condensers in the power lines, the output diodes and a small minimum charge.

The power pack also has a +5 V. state detection blok (88), provided with an input protection driver, that operates when the voltage goes below threshold, a correct voltage light going off, and immediately warning the alarm block, while when the opposite happens and voltage rises unduly, the detection block activates the input block protection circuit (90).

The power pack has a ±12 V. voltage comparator block (85) comparing two sample voltages in the analogue lines with a stable reference.

When any of the lines falls below the set thresholds, the local alarms are turned on and the CPU is warned.

Furthermore, the power pack in the validation and identification unit subject hereof has a DC/DC converter (89) manufactured with hybrid technology, an artificial lines block (84) where failure of the power fuse in the lines terminal will turn on one of the local alarms, and an alarms block (86) to which warnings from the rest of the power pack blocks arrive.

The rest position of an alarm relay gives way to the alarm indicator, opening the external loop.

When everything is correct, the ON relay is maintained, the indicator being switched off and the loop closed.

This drawing also shows the output voltage signals for +/+12 V. comparison (91) , central feed (92), correct OV feed output (93), central feed (94), central -48 V. feed (95), alarms signals (96), +5 V. feeding (97) and +12 V. and -12 V. analogue feed.

In short, the main characteristics of this power pack are to provide the Exchange with battery feed, with polarity inversion protection, and the feed output to artificial lines with overcurrent protection.

Similarly, the power pack protects the input to the DC/DC converter, protected +5 V. digital feed output, limited ±12 V. analogue feed output in short-circuit current, independent treatment of analogue and digital returns to minimize doorknob noise, incorporating state lines for CPU, with faults indicators.

Finally, the power pack will have switches for tests and adjustments, with internal test connector, general front on/off switch and light indicators of the general voltage state.

We feel that the device has now been sufficiently described for any expert in the art to have grasped the full scope of the invention and the advantages it offers.

The materials, shape, size and layout of the elements may be altered provided that this entails no modification of the essential features of the invention.

The terms used to describe the invention herein should be taken to have a broad rather than a restrictive meaning.

## Claims

1. Validation and identification unit, designed to identify a modular public telephone univocally, automatically validating a credit card used, comprising several communications cards arranged inside a framework, characterised by an architecture comprising a lines module (1), a CPU module (2), a communications module (3), a power module (4) and an interconnection module (5) with an X.25 connector, the CPU module (2) being linked to the lines (1) and communications (3) modules by means of addressing (6), data (7) and general units control (8) signals, having an independent bus (9) controlling the communications module (3), a power bus (14) connected to all the various modules and a power checking signals bus (13), the CPU module (2), communications module (3) and interconnection module (5) being moreover connected by means of X.25 (10 and 11) and V.22 bis modem control (12) buses, the modular telephones validation and identificaiton output (16) being positioned at the lines module (1).

2. Validation and identification unit, as in claim one, characterised in that the CPU module (2) comprises two microprocessors (50 and 47) arranged to be topologically equivalent, one such microprocessor (47) specialising in X.25 packet switching network access protocol level 2 control and having a modular design that allows access to all the resources of the module, several buffers (38, 39 and 51) being used to demultiplex and isolate data (57), control (58) and address (59) buses, a memory address (40,52, and 53) for all the resources, real time clock (45) and monitoring circuits (48) allowing not only asynchronous read unit out and print out between microprocessors (47 and 50), but decoding of peripherals and handling of asynchronous connections with the communications (3) and lines (1) modules.

3. Validation and identification unit, as in previous claims, characterised in that switched network connection lines control by means of a register (65) and asynchronous protocol V.23 modem (70), packet switching network lines control by means of V.22 bis modem (75) and parallel communication with the CPU module (2) by means of a two-way register (62), all carried out by the communications module (3), are supported in a microprocessor- (68) and EPROM and RAM memory- (69) based architecture.

4. Validation and identification unit, as in previous claims, characterised in that the lines module (1) has a microprocessor (22) based architecture, through which it controls identificaton, communication, power and connection with the modular public telephones, detection of line cuts and openings at both the user and exchange pair, and has a devices decoder (21) through which it programmes a modem (24) the module is provided with, lines status supervisory circuits being provided to detect timed openings, to detect call current on the side of the exchange, local telephones feed current source and lines electric discharges protections, communicating with the CPU module (2) through a two-way register (18).

5. Validation and identification unit, as in previous claims, characterised in that the power module (4) generates the analogue and digital power voltages required for the unit, from the exchange voltage and by means of a DC-DC converter (89), input (90) and output (85 and 88) protection circuits being provided against overcurrents and overvoltages in various components of this power module, and a block (86) that processes the alarms generated and sends a status report to the CPU module (2).

6. Validation and identification unit, as in previous claims, characterised in that the interconnection module (5) connects all the modules to each other, moreover allowing connection to the modular public telephones, the lines at the exchange, input of general power, connection to X.25 or V.22 bis modem dedicated pair.

7. Validation and identificaiton unit, as in previous claims, characterised in making cyclic operation self-checks, in addition to generating and sending modular public telephone operating system status reports and alarms.

8. Validation and identification unit, as in previous claims, characterised in that protocol is exchanged with both modular public telephones and the validation and invoicing centre and the modular public telephones operating system through the switched telephone network and/or packet switching network, identifying the modular public telephones and automatically validating the credit cards used in the same by exchanging coded messages with the modular public telephone and conversing with the modular public telephone operating system and the validation and invoicing centres in order to obtain the credit allowed.

9. Validation and identification unit, as in previous claims, characterised in that operating parameters can be remotely programmed from the modular public telephone operating system whilst at the same time teleprogramming the modular public telephones connected thereto.

## Patentansprüche

1. Einheit zur Bewertung und Identifizierung, die dazu bestimmt ist, ein öffentliches modulares Fernsprechgerät eindeutig durch Bewertung einer automatisch verwendeten Kreditkarte zu identifizieren, welche aus diversen, im Innern eines Rahmens angeordneten Verbindungskarten besteht, hauptsächlich durch die Architektur gekennzeichnet, die ein Leitungsmodul (1), ein CPU-Modul (2), ein Verbindungsmodul (3), ein Versorgungsmodul (4) und ein Durchschaltungsmodul (5) mit einem Anschluss X.25 bilden, wobei das CPU-Modul (2) über Adressierungssignale (6), Datensignale (7) und Signale für die Steuerung der Einheiten (8) mit dem Leitungsmodul (1) und dem Verbindungsmodul (3) verbunden ist, woneben ein unabhängiger Bus (15) für die Steuerung des Leitungsmoduls (1), ein unabhängiger Bus (9) für die Steuerung des Verbindungsmoduls (3), ein an den verschiedenen Modulen angeschlossener Versorgusngsbus (14) und ein Bus (13) für die Versorgungstestsignale vorgesehen ist und das CPU-Modul (2), das Verbindungsmodul (3) und das Durchschaltungsmodul (5) über die Busse X.25 (10 und 11) und die Busse für die Steuerung des Modems V.22 bis (12) ausserdem miteinander verbunden sind, während sich der entsprechende Bewertungs- und Identifizierungsausgang (16) zu den modularen Fernsprechgeräten im Leitungsmodul (1) befindet.

2. Einheit zur Bewertung und Identifizierung, nach Anspruch eins dadurch gekennzeichnet, dass das CPU-Modul (2) aus zwei Mikroprozessoren (50 und 47) besteht, welche in topologisch gleichwertiger Form angeordnet sind, wobei einer derselben (47) auf die Steuerung der Ebene 2 des Protokolls für den Zugriff auf das Paketschaltnetz X.25 spezialisiert ist, und dass ein modulares Design den Zugriff zu allen Mitteln des Moduls ermöglicht, woneben diverse Puffer (38, 39 und 51) für die Desmultiplexierung und Isolierung der Datenbusse (57), Steuerbusse (58) und Adressenbusse (59) eingesetzt werden, mit einer gespeicherten Adressierung (40, 52 unbd 53) aller Mittel, Realzeituhr (45) und Überwachungskreise (48), wodurch nicht nur asynchrone Ablesungen und Aufzeichnungen der Mikroprozessoren (47 und 50), sondern auch die Decodierung der Peripheriegeräte und die Handhabung der asynchronen Anschlüsse an die Verbindungsmodule (3) und Leitungsmodule (1) möglich werden.

3. Einheit zur Bewertung und Identifizierung, nach den vorangehenden Ansprüchen dadurch gekennzeichnet, dass die Steuerung der Leitungen für den Anschluss nan das geschaltete Netz über ein Register (65) und Modem V.23 mit asynchronem Protokoll (70), die Steuerung der Leitungen zum Paketschaltnetz über ein Modem V.22 bis (75) und die zum CPU-Modul (2) parallele Verbindung über ein Register (62) in zwei Richtungen, die insgesamt vom Verbindungsmodul (3) durchgeführt werden, in einer Architektur angeordnet sind, die auf einem Mikroprozessor (68) und einem EPROM- und RAM-Speicher (69) beruht.

4. Einheit zur Bewertung und Identifizierung, nach den vorangehenden Ansprüchen dadurch gekennzeichnet, dass das Leitungsmodul (1¦) die Identifizierung, Verbindung, Versorgung und den Anschluss der öffentlichen modularen Fernsprechgeräte, die Feststellung von Unterbrechungen und Freigaben der Leitung am Moment des Benutzers und der Zentrale über eine Architektur steuert, die auf einem Mikroprozessor (22) beruht und die Programmioerung des Modems (24), aus dem dieses Modul besteht, mit Hilfe eines Vorrichtungsdecodierers (21) durchführt und über Kreise für die Überwachung des Leitungszustands verfügt, um zeitgesteuerte Freigaben, zentralseitige Anrufströme, lokale Stromversorgungsquellen der Fernsprechgeräte und Schutz gegen elektrische Entladungen in den Leitungen festzustellen, wobei die Verbindung zur CPU (2) über ein Zweirichtungsregister (18) hergestellt wird.

5. Einheit zur Bewertung und Identifizierung, nach den vorangehenden Ansprüchen dadurch gekennzeichnet, dass das Versorgungsmodul (4) die für die Einheit erforderlichen analogen und digitalen Versorgungsspannungen über einen Gleichstrom-Gleichstrom-Wandler (89) aus der Spannung der Zentrale, einschl. Eingangs- (90) und Ausgangsschutzkreise (85 und 88) gegen Überstrom und Überspannungen in verschiedenen Teilen dieses Versorgungsmoduls, mit einem Block (86) für die Behandlung der erzeugten Alarme und die Weiterleitung des Zustands an das CPU-Modul (2).

6. Einheit zur Bewertung und Identifizierung, nach den vorangehenden Ansprüchen dadurch gekennzeichnet, dass das Durchschaltmodul (5) alle Module untereinander verbindet und ausserdem den Anschluss an die öffentlichen modularen Fernsprechgeräte, Leitungen der Zentrale, Eingang der Versorgungseinheit sowie den Anschluss an X.25 oder das vorgesehene Moment über das Modem V22 bis zulässt.

7. Einheit zur Bewertung und Identifizierung, nach den vorangehenden Ansprüchen dadurch gekennzeichnet, dass zyklische Betriebsselbstkontrollen durchgeführt und daneben Berichte erstellt und Zustandsmeldungen an das Betriebssystem des öffentlichen modularen Fernsprechgeräts ausgegeben werden.

8. Einheit zur Bewertung und Identifizierung, nach den vorangehenden Ansprüchen hauptsächlich dadurch gekennzeichnet, dass sowohl mit den öffentlichen modularen Fernsprechgeräten als auch mit der Zentrale zur Bewertung und Fakturierung und dem Betriebssystem des modularen Fernsprechgeräts über das geschaltete Fernsprechnetz und/oder Paketschaltnetz Protokolle ausgetauscht und die öffentlichen modularen Fernsprechgeräte identifiziert sowie die darin automatisch verwendeten Kreditkarten bewertet werden, und zwar über den Austausch der codierten Meldungen mit dem öffentlichen modularen Fernsprechgerät und dem Dialog mit dem Betriebssystem des öffentlichen modularen Fernsprechgeräts und den Zentralen zur Bewertung und Fakturierung zur Feststellung des gewährten Kredits.

9. Einheit zur Bewertung und Identifizierung, nach den vorangehenden Ansprüchen hauptsächlich dadurch gekennzeichnet, dass eine Fernprogrammierung der Betriebsparameter vom Betriebssystem des öffentlichen modularen Fernsprechgeräts aus zulässig ist und gleichzeitig die Fernprogrammierung der daran angeschlossenen öffentlichen modularen Fernsprechgeräte vorgenommen wird.

## Revendications

1. Unité de Validation et d'Identification, destinée à identifier un téléphone public modulaire de façon univoque en validant une carte de crédit utilisée automatiquement, constituée par diverses cartes de communications disposées à l'intérieur d'un châssis, caractérisée essentiellement par l'architecture constituée par un module de lignes (1), un module de CPU (2), un module de communications (3), un module d'alimentation (4) et un module d'interconnexion (5) avec un connecteur X.25, le module de CPU (2) étant relié au module de lignes (1) et au module de communications (3) au moyen de signaux d'adressage (6), de données (7) et de contrôle général d'unités (8); consistant en un bus indépendant (15) de contrôle du module de lignes (1), un bus indépendant (9) de contrôle du module de communications (3), un bus (14) d'alimentation connecté à tous les différents modules et un bus (13 de signaux de vérification d'alimentation, le module de CPU (2), le module de communications (3) et le module d'interconnexion (5) étant également connectés au moyen des bus X.25 (10 et 11) et de contrôle de modem C.22 bis (12), la sortie (16) de validation et d'identification correspondant aux téléphones modulaires se situant dans le module de lignes (1).

2. Unité de Validation et d'Identification selon la première revendication, caractérisée par le fait que le module de CPU (2) est constitué par deux microprocesseurs (50 et 47) situés de façon topologiquement équivalente, l'un d'eux (47) étant spécialisé dans le contrôle du niveau 2 du protocole d'accès au réseau de commutation de paquets X.25 et une conception modulaire qui permet un accès à toutes les ressources du module en utilisant divers tampons (38, 39 et 51) pour le démuliplexage et l'isolement des bus de données (57), de contrôle (58) et des adresses (59), avec un adressage en mémoire (45) et des circuits de surveillance (48), permettant non seulement les lectures et les écritures asynchrones entre les microprocesseurs (47 et 50), mais également le décodage de périphériques et l'emploi des connexions asynchrones avec les modules de communications (3) et de lignes (1).

3. Unité de Validation et d'Identification selon les revendications qui précèdent, caractérisée par le fait que le contrôle des lignes de connexion au réseau commuté au moyen d'un registre (65) et du modem B.23 à protocole asynchrone (70), le contrôle des lignes au réseau de commutation de paquets au moyen d'un modem V.22 bis (75), ainsi que la communication en parallèle avec le module de CPU (2) au moyen d'un registre (62) bidirectionnel, tous réalisés par le module de communications (3), s'appuient sur une architecture basée sur microprocesseur (68) et mémoire EPROM et RAM (69).

4. Unité de Validation et d'Identification selon les revendications qui précédent, caractérisée par le fait que le module de lignes (1), au moyen d'une architecture basée sur un microprocesseur (22), contrôle l'identification, la communication, l'alimentation et la connexion avec les téléphones publics modulaires, la détection de coupures et d'ouverture de ligne, tant dans le couple d'usager que dans celui de la centrale et, au moyen d'un décodeur de dispositifs (21), réalise la programmation du modem (24) constituant ce module, et dispose des circuits de supervision de l'état des lignes pour la détection d'ouvertures temporisées, la détection de courant d'appel du côté de la centrale, source de courant d'alimentation locale des téléphones, et des protections contre des décharges électriques dans les lignes et se communique avec le module de CPU (2) au moyen d'un registre bidirectionnel.

5. Unité de Validation et d'Identification selon les revendications qui précèdent, caractérisée par le fait que le module d'alimentation (4) produit les tensions d'alimentations analogiques et digitales nécessaires pour l'unité à partir de la tension de la centrale et au moyen d'un convertisseur (89) continu-continu, comprenant des circuits de protection d'entrée (90) et de sortie (85 et 88) contre des surcharges de courant et des survoltages dans différents composants de ce module d'alimentation, avec un bloc (86) de traitement des alarmes produites et d'envoi de son état au module de CPU (2).

6. Unité de Validation et d'Identification selon les revendications qui précédent, caractérisée par le fait que le module d'interconnexion (5) connecte tous les modules entre eux et permet, en outre, la connexion aux téléphones publics modulaires, aux lignes de la centrale, à l'entrée de l'alimentation générale, la connexion à X.25 ou couple adressé au moyen du modem V.22 bis.

7. Unité de Validation et d'Identification selon les revendications qui précédent, caractérisée par le fait de réaliser des autovérifications cycliques de fonctionnement, en plus de produire des rapports et des alarmes d'état au système d'exploitation du téléphone public modulaire.

8. Unité de Validation et d'Identification selon les revendications qui précédent, caractérisée essentiellement par l'échange de protocole, tant avec les téléphones publics modulaires qu'avec le centre de validation et de facturation et avec le système d'exploitation du téléphone public modulaire, via le réseau téléphonique commuté et/ou le réseau de commutation de paquets, en réalisant l'identification des téléphones publics modulaires et la validation des cartes de crédit utilisées dans ceux-ci de façon automatique au moyen de l'échange de messages codés avec le téléphone public modulaire et du dialogue avec le système d'exploitation du téléphone public modulaire et les centres de validation et de facturation pour obtenir le crédit autorisé.

9. Unité de Validation et d'Identification selon les revendications qui précédente, caractérisée par le fait d'admettre la téléprogrammation de paramètres de fonctionnement depuis le système d'exploitation du téléphone public modulaire et de réaliser à son tour la téléprogrammation des téléphones publics modulaires qui y sont connectés.
